# EUROPEAN PATENT SPECIFICATION

(11) **EP 4 450 391 B1**
(45) Date of publication and mention of the grant of the patent: **05.08.2026**
(21) Application number: 24170907.0
(22) Date of filing: 17.04.2024
(51) Int. Cl.: B64D 11/06

(54) **EMERGENCY OXYGEN SYSTEMS FOR INTERNAL CABINS OF AIRCRAFT**
NOTSAUERSTOFFSYSTEME FÜR FLUGZEUGINNENRAUM
SYSTÈMES D'OXYGÈNE D'URGENCE POUR CABINES INTERNES D'AÉRONEFS

(30) Priority: 17.04.2023 US 202318301326; 22.01.2024 US 202418418611
(43) Date of publication of application: 23.10.2024
(73) Proprietor: The Boeing Company, Arlington, VA 22202 (US)
(72) Inventor: FABRY, Andrew Leo, Arlington, 22202 (US); BOROUGHS, Adam Patrick, Arlington, 22202 (US); BENSON, Katia Marguerite, Arlington, 22202 (US); BROWN, Douglas Alan, Arlington, 22202 (US); CAGNINA, Franco Marino, Arlington, 22202 (US)
(74) Representative: Morrall, Jonathan Ian McLachlan

(56) References cited:
- US-A- 4 154 237
- US-A1- 2002 020 652
- US-A1- 2014 060 545
- US-A1- 2019 126 078
- US-B2- 7 621 275

## Description

### FIELD OF THE DISCLOSURE

Embodiments of the present disclosure generally relate to emergency oxygen systems for internal cabins of aircraft.

### BACKGROUND OF THE DISCLOSURE

Vehicles such as commercial aircraft are used to transport passengers between various locations. Emergency oxygen assemblies are provided within internal cabins of commercial aircraft. In the event of a predetermined depressurization within an internal cabin, the emergency oxygen assemblies are configured to deploy so that passengers are able to breathe therefrom.

Typically, the emergency oxygen assemblies, including masks and conduits, are housed within passenger service units (PSUs), which are disposed above seats within the internal cabin. As can be appreciated, the emergency oxygen assemblies occupy space within the PSUs, thereby precluding other components from being housed within the PSUs.

Additionally, internal cabins of certain commercial aircraft can be reconfigured as desired. For example, spacing or pitch between seats within the internal cabin can be changed. After reconfiguration, the emergency oxygen assemblies within the PSUs may not be aligned with respective seats. Accordingly, additional time and labor is typically required to adjust the emergency oxygen assemblies in relation to the reconfigured seats.

US2019126078A1, according to its abstract, describes a device for the provision of oxygen masks which has a closeable container for oxygen masks, an extendable arm having links coupled in articulated fashion and having an outer end, and a driving device. The outer end is coupled to at least one oxygen mask. The arm adopts a storage position in which the arm is arranged completely within the container, and an extended position in which the outer end is moved out of the container and in which the arm holds the oxygen mask at a distance from the container. The driving device is coupled to the arm and passes the links out of the container. The links enclose a pivoting range extending as far as a level juxtaposition of the links. When extended, the arm adopts the level juxtaposition under the action of gravity for the lateral spacing of the relevant oxygen mask from the container.

US 4154237A1, according to its abstract, describes that the passenger flying in today's high altitude commercial jet airplanes is generally seated in a pressurized compartment which in some airplanes has an overhead passenger service unit that houses emergency oxygen masks which are automatically deployed in the event of cabin depressurization. For high density abreast seating arrangements, the passengers seated in the aisle seats may be outside of the reach radius for the emergency oxygen mask drop zone from the overhead storage unit. Therefore, the present invention relates to apparatus comprising a spring cartridge extension device for laterally extending the required number of oxygen masks, upon release of the door to the oxygen mask container; and positioning them over the abreast seating arrangements, so that an oxygen mask is within the reach of each of the seated passengers.

US 7621275B2, according to its abstract, describes a cover assembly for mask containers with two covers, wherein the covers have a pivot axis parallel to the longitudinal axis of the aircraft and further, are pivotable at 90°.

US 20020020652A1, according to its abstract, describes a box for storage of passenger oxygen masks in an aircraft has a housing which contains a network for distributing oxygen from a general pipe or from a chemical generator and a door arranged to be beneath the box when it is in position in an aircraft. An inside face of the door or of the housing carries cradles defining a retaining position for each of the oxygen masks and latches that are displaceable responsive to closing the door from a position in which they define mask-retaining sockets to a position in which the latches release the masks.

US 20140060545A1, according to its abstract, describes an apparatus for ejecting an oxygen mask. The apparatus comprises a housing provided with a housing opening and having a housing cover which can be moved between a closed position in which the housing opening is covered at least in sections by the housing cover, and an open position, an oxygen mask disposed inside the housing, in the closed position, and an ejector strap having one end which is connected to the housing cover. The invention is further characterized in that the ejector strap co-operates in the closed position with a side of the oxygen mask which faces away from the housing cover, such that the oxygen mask is ejected from the housing by the housing cover moving into the open position.

### SUMMARY OF THE DISCLOSURE

A need exists for a system and method for freeing up space within PSUs. Further, a need exists for ensuring emergency oxygen assemblies are easily and readily available within an internal cabin of an aircraft even if seats within the internal cabin are reconfigured (for example, seat pitch between at least two seats may change).

With those needs in mind, an emergency oxygen system for an internal cabin according to claim 1 is provided. The emergency oxygen system includes a housing including one or more compartments, and one or more oxygen assemblies. The one or more oxygen assemblies include a mask and a fluid conduit. The mask is configured to be stowed within and deployed from the one or more compartments. A door is moveably secured to the housing. The door is moveable between a closed position underneath the one or more compartments to secure the mask within the one or more compartments, and an open position during a deployment event in which the mask drops down and laterally left or right (such as inboard) out of the one or more compartments. The mask is configured to hang down from a portion of the door when the door is in the open position. In at least one example, the door is configured to rotate between the closed position and the open position.

The mask is supported on an interior surface of the door when the door is in the closed position.

At least a portion of the fluid conduit is secured to an interior surface of the door. The door includes one or more clips secured to the interior surface. The portion(s) of the fluid conduit is secured to the interior surface of the door by the one or more clips.

One or more retainers are coupled to the one or more compartments. The one or more retainers are moveable between a retaining position in which the one or more retainers temporarily support the mask within the one or more compartments when the door is the open position, and a disengaged position in which the one or more retainers do not support the mask within the one or more compartments. As a further example, a portion of the door moves the one or more retainers from the retaining position to the disengaged position when the door moves into the closed position. The one or more retainers can include one or more arms pivotally coupled to one or more portions of the one or more compartments. As another example, the one or more retainers comprise one or more snap clips.

A method according to claim 13 is provided. Preferred embodiments are covered in the dependent claims.

### BRIEF DESCRIPTION OF THE DRAWINGS

Figure 1 illustrates a schematic block diagram of an emergency oxygen system within an internal cabin of an aircraft, according to an embodiment of the present disclosure.
Figure 2 illustrates a perspective front view of an aircraft, according to an embodiment of the present disclosure.
Figure 3A illustrates a top plan view of an internal cabin of an aircraft, according to an embodiment of the present disclosure.
Figure 3B illustrates a top plan view of an internal cabin of an aircraft, according to an embodiment of the present disclosure.
Figure 4 illustrates a perspective interior view of an internal cabin of an aircraft, according to an embodiment of the present disclosure.
Figure 5 illustrates a schematic block diagram of an oxygen supply coupled to an oxygen assembly, according to an embodiment of the present disclosure.
Figure 6 illustrates a schematic block diagram of an oxygen supply coupled to a plurality of oxygen assemblies, according to an embodiment of the present disclosure.
Figure 7 illustrates a perspective internal view of an internal cabin of an aircraft, according to an embodiment of the present disclosure.
Figure 8 illustrates an axial cross-sectional view of an internal cabin of an aircraft, according to an embodiment of the present disclosure.
Figure 9 illustrates an axial cross-sectional view of an oxygen assembly of an emergency oxygen system within an internal cabin, according to an embodiment of the present disclosure.
Figure 10 illustrates a lateral view of an emergency oxygen system within an internal cabin, according to an embodiment of the present disclosure.
Figure 11 illustrates a perspective lateral view of an emergency oxygen system within an internal cabin, according to an embodiment of the present disclosure.
Figure 12 illustrates a flow chart of a method, according to an embodiment of the present disclosure.
Figure 13 illustrates a perspective lateral bottom view of an emergency oxygen system having oxygen assemblies in deployed positions, according to an embodiment of the present disclosure.
Figure 14 illustrates a perspective bottom view of the emergency oxygen system of Figure 13 having the oxygen assemblies in the deployed positions.
Figure 15 illustrates a perspective bottom view of a door in an open position, according to an embodiment of the present disclosure.
Figure 16 illustrates a perspective lateral bottom view of an open compartment, according to an embodiment of the present disclosure.
Figure 17 illustrates a perspective fore bottom view of the open compartment.
Figure 18 illustrates a perspective end view of an emergency oxygen system, according to an embodiment of the present disclosure.
Figure 19 illustrates a flow chart of a method, according to an embodiment of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

As described herein, embodiments of the present disclosure provide an emergency oxygen system that is separate and distinct from passenger service units (PSUs) within an internal cabin of an aircraft. In particular, oxygen assemblies of the system are uncoupled from the PSUs. The oxygen assemblies are not within the PSUs. Further, the oxygen assemblies are uncoupled from seat pitch. That is, locations of the oxygen assemblies are not dependent upon seat pitch.

Separating the emergency oxygen system from the PSUs allows for easier seat reconfiguration within the internal cabin and shorter pitch between seats. Further, the emergency oxygen systems described herein reduce variability in configurations, thereby reducing recurring engineering time and subsequent costs. Also, embodiments of the present disclosure increase available space within PSUs, thereby allowing for additional components therein.

In at least one embodiment, the emergency oxygen system includes a rail (or an array of rails) that extends over a length of the internal cabin. The rail(s) is separated from the PSUs. The rail(s) includes the oxygen assemblies, such as may include masks and fluid conduits, which are in fluid communication with an oxygen supply.

In at least one embodiment, the oxygen assemblies are longitudinally arrayed along a length of the internal cabin. The oxygen assemblies are spaced apart to ensure passengers within the internal cabin have access thereto, regardless of the pitch between seat assemblies. For example, the internal cabin can be reconfigured to change pitch between seat assemblies and oxygen assemblies are still readily and easily available for each seat within the internal cabin.

As described herein, in at least one example, the emergency oxygen system is separated from PSUs, which allows for masks to be linearly arranged along a length of the internal cabin. In stowed positions, each mask is housed in a box or other such compartment. A door covers the compartment in a closed position. The door can be spring-loaded, such that during an emergency, the door moves into an open position, such as by rotating 180 degrees, and the masks deploy out of the compartments. In at least one example, the masks are hung from the door by tubing of fluid conduits. In the deployed positions, the masks hang inboard in relation to the compartments (instead of dropping straight down from the compartments), thereby providing better reach for passengers and flight attendants.

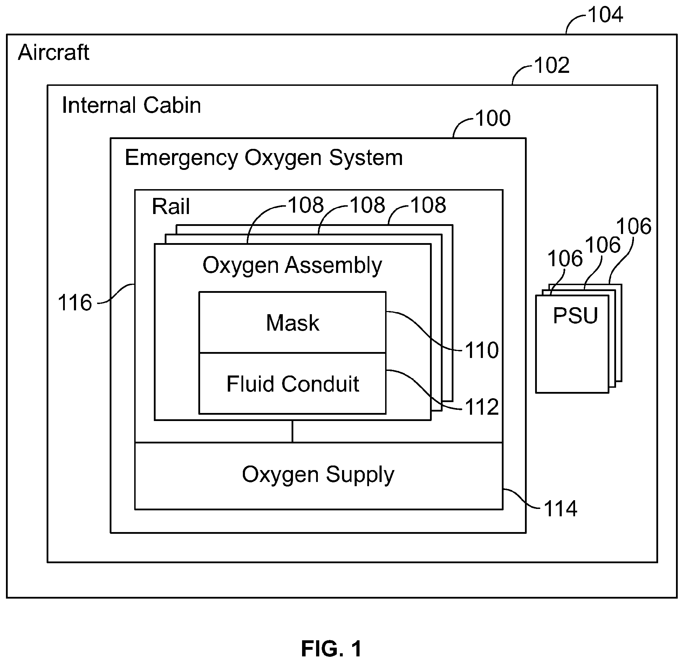

Figure 1 illustrates a schematic block diagram of an emergency oxygen system 100 within an internal cabin 102 of an aircraft 104, according to an embodiment of the present disclosure. The emergency oxygen system 100 is separate and distinct from personal service units (PSUs) 106 within the internal cabin 102. In particular, the PSUs 106 do not include the emergency oxygen system 100, and vice versa.

The emergency oxygen system 100 includes a plurality of oxygen assemblies 108. The oxygen assemblies 108 include a mask 110 and a fluid conduit 112. During a sudden cabin depressurization, the oxygen assemblies 108 are configured to deploy (such as drop down). An oxygen supply 114 is in fluid communication with the fluid conduits 112. In at least one embodiment, each oxygen assembly 108 is in fluid communication with a respective oxygen supply 114, such as an oxygen canister fluidly coupled to the fluid conduit 112. In at least one other embodiment, an oxygen supply 114 such as an oxygen tank or cylinder is in fluid communication with a plurality of fluid conduits 112 of oxygen assemblies 108, such as via a manifold.

In at least one embodiment, the emergency oxygen system 100 includes a rail 116 that extends along a length of the internal cabin 102. The rail 116 can be a single rail or an array of rails, for example. The rail 116 retains the oxygen assemblies 108, such as at a position above and/or to the side of seats within the internal cabin 102. At least a portion of the oxygen supply 114 may also be retained by the rail 116. Optionally, the rail 116 does not retain the oxygen supply 114. Also, optionally, the emergency oxygen system 100 may not include the rail 116. Instead, the oxygen assemblies 108 may be secured to portions of the internal cabin (such as side walls, a ceiling, a floor, or the like) within the use of a rail.

The oxygen assemblies 108 are separate and distinct from the PSUs 106. The oxygen assemblies 108 are uncoupled from the PSUs 106. The PSUs 106 do not include the oxygen assemblies 108.

As described herein, a vehicle (such as the aircraft 104) includes the internal cabin 102. A plurality of PSUs 106 are within the internal cabin 102. The emergency oxygen system 100 is within the internal cabin 102. The emergency oxygen system 100 is separate and distinct from the plurality of PSUs 106.

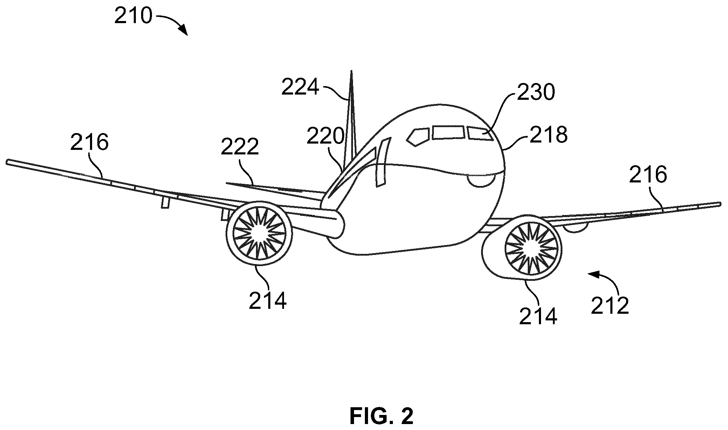

Figure 2 illustrates a perspective front view of an aircraft 210, according to an embodiment of the present disclosure. The aircraft 210 is an example of the aircraft 104, shown in Figure 1. The aircraft 210 includes a propulsion system 212 that includes engines 214, for example. Optionally, the propulsion system 212 may include more engines 214 than shown. The engines 214 are carried by wings 216 of the aircraft 210. In other embodiments, the engines 214 may be carried by a fuselage 218 and/or an empennage 220. The empennage 220 may also support horizontal stabilizers 222 and a vertical stabilizer 224.

The fuselage 218 of the aircraft 210 defines an internal cabin 230, which includes a flight deck or cockpit, one or more work sections (for example, galleys, personnel carry-on baggage areas, and the like), one or more passenger sections (for example, first class, business class, and coach sections), one or more lavatories, and/or the like. The internal cabin 230 is an example of the internal cabin 102, as shown in Figure 1.

Alternatively, instead of an aircraft, embodiments of the present disclosure may be used with various other vehicles, such as automobiles, buses, locomotives and train cars, watercraft, and the like. Further, embodiments of the present disclosure may be used with respect to fixed structures, such as commercial and residential buildings.

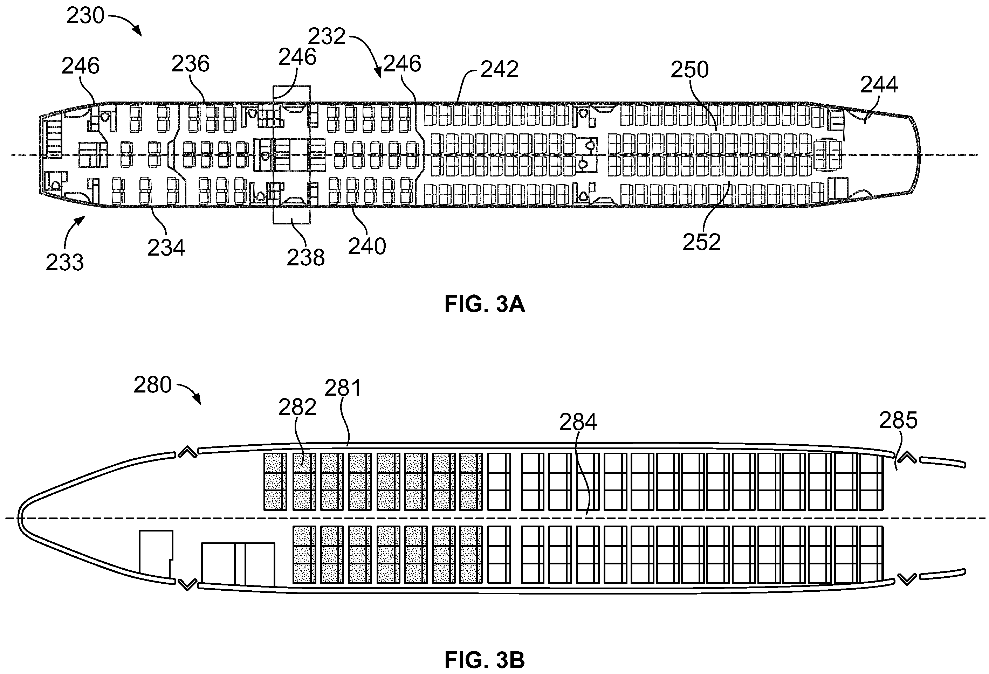

Figure 3A illustrates a top plan view of an internal cabin 230 of an aircraft, according to an embodiment of the present disclosure. The internal cabin 230 may be within the fuselage 232 of the aircraft, such as the fuselage 218 of Figure 2. For example, one or more fuselage walls may define the internal cabin 230. The internal cabin 230 includes multiple areas, including a front section 233, a first-class section 234, a business class section 236, a front galley station 238, an expanded economy or coach section 240, a standard economy of coach section 242, and an aft section 244. It is to be understood that the internal cabin 230 may include more or less areas than shown. For example, the internal cabin 230 may not include a first-class section, and may include more or less galley stations than shown. Each of the sections may be separated by a cabin transition area 246, which may include class divider assemblies between aisles.

As shown in Figure 3A, the internal cabin 230 includes two aisles 250 and 252 that lead to the aft section 244. Optionally, the internal cabin 230 may have fewer or more aisles than shown. For example, the internal cabin 230 may include a single aisle that extends through the center of the internal cabin 230 that leads to the aft section 244.

The emergency oxygen system 100 shown in Figure 1 can be disposed within the internal cabin 230. For example, the rail 116 can extend along a length of the internal cabin 230.

Figure 3B illustrates a top plan view of an internal cabin 280 of an aircraft, according to an embodiment of the present disclosure. The internal cabin 280 is an example of the internal cabin 230 shown in Figure 2. The internal cabin 280 may be within a fuselage 281 of the aircraft. For example, one or more fuselage walls may define the internal cabin 280. The internal cabin 280 includes multiple areas, including a main cabin 282 having passenger seats, and an aft section 285 behind the main cabin 282. It is to be understood that the internal cabin 280 may include more or less areas than shown.

The internal cabin 280 may include a single aisle 284 that leads to the aft section 285. The single aisle 284 may extend through the center of the internal cabin 280 that leads to the aft section 285. For example, the single aisle 284 may be coaxially aligned with a central longitudinal plane of the internal cabin 280.

The emergency oxygen system 100 shown in Figure 1 can be disposed within the internal cabin 280. For example, the rail 116 can extend along a length of the internal cabin 280.

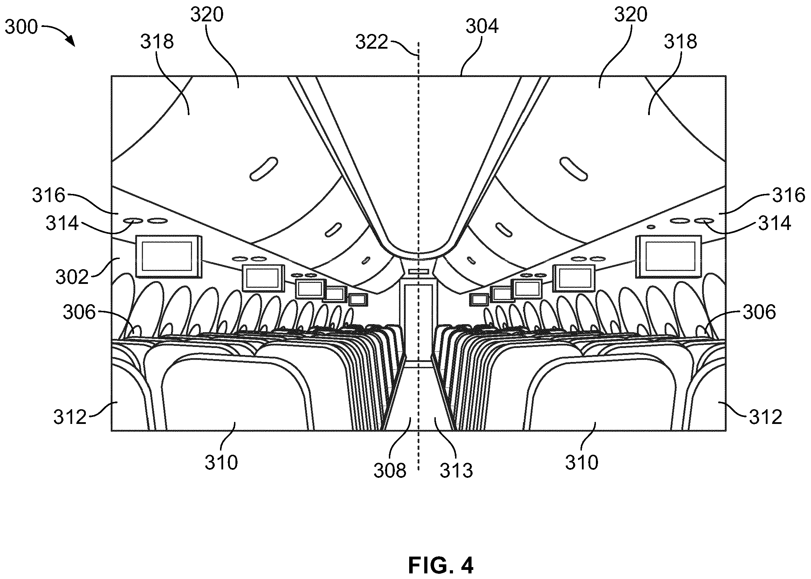

Figure 4 illustrates a perspective interior view of an internal cabin 300 of an aircraft, according to an embodiment of the present disclosure. The internal cabin 300 is an example of the internal cabin 102 shown in Figure 1. The internal cabin 300 includes outboard walls 302 and a ceiling 304. Windows 306 may be formed within the outboard walls 302. A floor 308 supports rows of seats 310. As shown in Figure 4, a row 312 may include two seats 310 on either side of an aisle 313. However, the row 312 may include more or less seats 310 than shown. Additionally, the internal cabin 300 may include more aisles than shown.

PSUs 314 are secured between an outboard wall 302 and the ceiling 304 and/or stowage bin assemblies 318 on either side of the aisle 313. The PSUs 314 extend between a front end and rear end of the internal cabin 300. For example, a PSU 314 may be positioned over each seat 310 within a row 312. Each PSU 314 may include a housing 316 that generally contains vents, reading lights, an attendant request button, and other such controls over each seat 310 (or groups of seats) within a row 312. Notably, the PSUs 314 do not include the oxygen assemblies 108 shown in Figure 1.

Overhead stowage bin assemblies 318 are secured to the ceiling 304 and/or the outboard wall 302 above and inboard from the PSU 314 on either side of the aisle 313. The overhead stowage bin assemblies 318 are secured over the seats 310. The overhead stowage bin assemblies 318 extend between the front and rear end of the internal cabin 300. Each stowage bin assembly 318 may include a pivot bin or bucket 320 pivotally secured to a strongback. The overhead stowage bin assemblies 318 may be positioned above and inboard from lower surfaces of the PSUs 314. The overhead stowage bin assemblies 318 are configured to be pivoted open in order to receive passenger carry-on baggage and personal items, for example.

As used herein, the term "outboard" means a position that is further away from a central longitudinal plane 322 of the internal cabin 300 as compared to another component. The term "inboard" means a position that is closer to the central longitudinal plane 322 of the internal cabin 300 as compared to another component. For example, a lower surface of a PSU 314 may be outboard in relation to a stowage bin assembly 318.

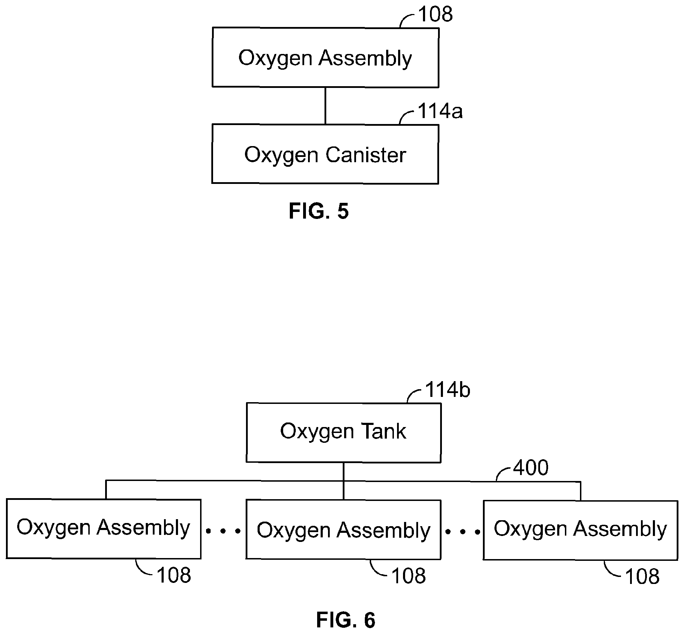

Figure 5 illustrates a schematic block diagram of an oxygen supply 114a coupled to an oxygen assembly 108, according to an embodiment of the present disclosure. As shown, each oxygen assembly 108 can be coupled to a respective oxygen supply 114a, such as an oxygen canister in direct fluid communication with the fluid conduit 112 (shown in Figure 1).

Figure 6 illustrates a schematic block diagram of an oxygen supply 114b coupled to a plurality of oxygen assemblies 108, according to an embodiment of the present disclosure. For example, the oxygen supply 114b is an oxygen tank or cylinder in fluid communication with a plurality of oxygen assemblies 108 through a fluid manifold 400. Referring to Figures 1 and 6, a single oxygen supply 114b can be in fluid communication with all of the oxygen assemblies 108 within the internal cabin 102. Optionally, multiple oxygen supplies 114b can be located within the internal cabin 102, each of which can be in fluid communication with a subset of the oxygen assemblies 108.

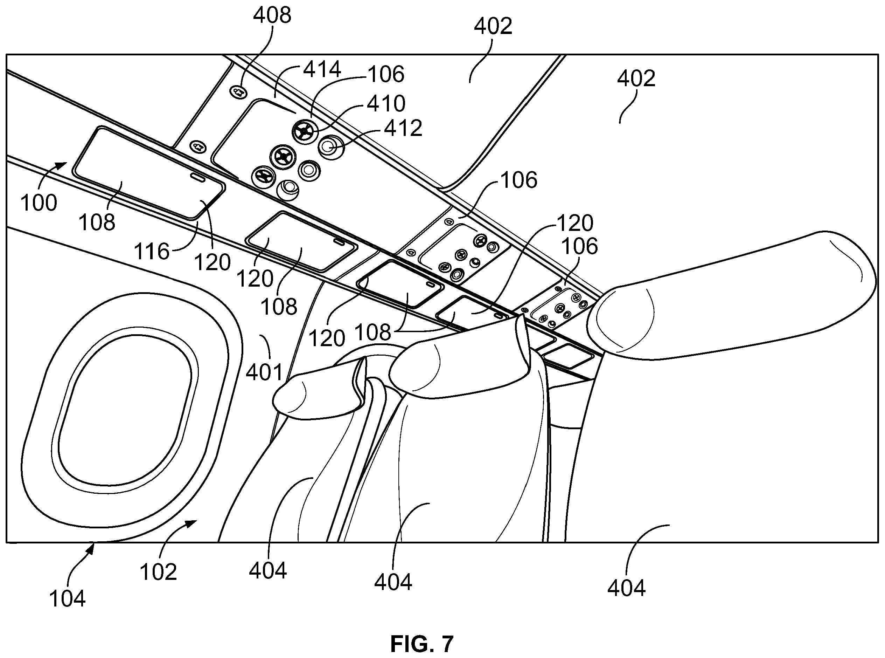

Figure 7 illustrates a perspective internal view of an internal cabin 102 of an aircraft 104, according to an embodiment of the present disclosure. As shown, the emergency oxygen system 100 includes the rail 116 that extends along a length of the internal cabin 102. The rail 116 retains the oxygen assemblies 108, such as may include oxygen drop panels 120. Referring to Figures 1 and 7, the masks 110 and fluid conduits 112 are disposed above the oxygen drop panels 120 when the oxygen assemblies 108 are in stowed positions, as shown in Figure 7.

The emergency oxygen system 100 is shown outboard from the PSUs 106. That is, the emergency oxygen system 100 is disposed closer to a sidewall 401 than the PSUs 106. Stowage bin assemblies 402 can be inboard from the PSUs 106. Optionally, the emergency oxygen system 100 can be inboard from the PSUs 106. The emergency oxygen system 100 is disposed over and/or to sides of seats 404 within the internal cabin 102.

The PSUs 106 can include attendant call buttons/lights 408, gaspers or passenger air outlets 410, and reading lights 412. For example, each PSU 106 includes a panel 414 that retains at least a portion of an attendant light 408, a gasper 410, and a reading light 412. In contrast, the oxygen system 100 does not include the PSUs 106, or portions thereof (such as the lights 408, gaspers 410, and reading lights 412).

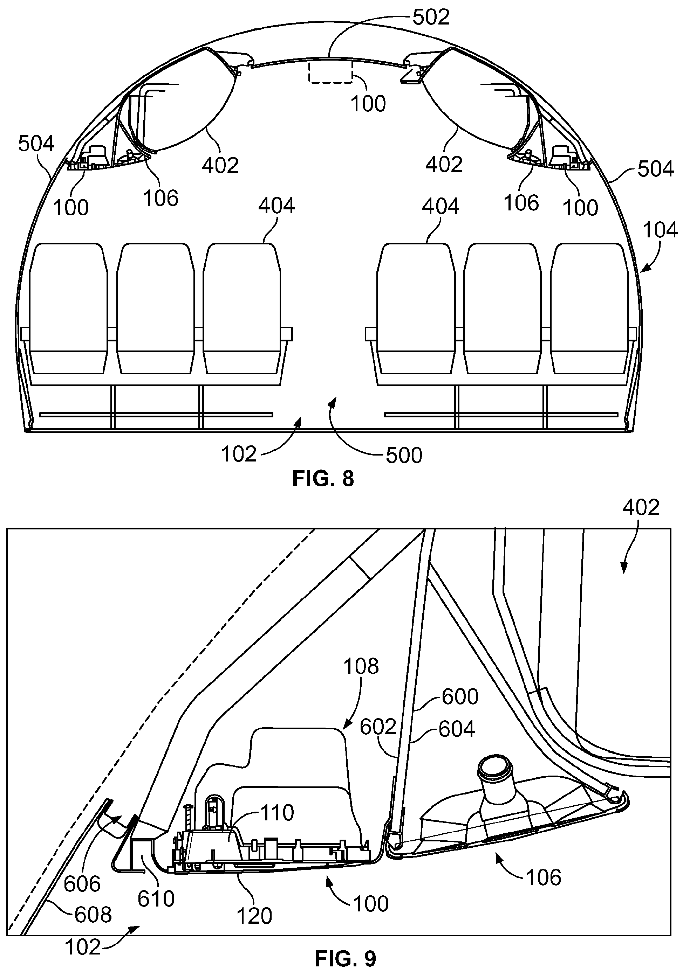

Figure 8 illustrates a perspective internal view of an internal cabin 102 of an aircraft 104, according to an embodiment of the present disclosure. The aircraft 104 can include a single aisle 500. Emergency oxygen systems 100 can be disposed to each side of the aisle 500. The emergency oxygen systems 100 extend along a length of the internal cabin 102.

Optionally, the internal cabin 102 can include multiple aisles. An emergency oxygen system 100 can be disposed above a center section of seats 404 between the aisles.

In at least one embodiment, an emergency oxygen system 100 can be secured to a ceiling 502 over the aisle 500. The emergency oxygen system 100 can be in addition to, or in place of, the emergency oxygen systems 100 shown proximate to the sidewalls 504.

Figure 9 illustrates an axial cross-sectional view of an oxygen assembly 108 of an emergency oxygen system 100 within an internal cabin 102, according to an embodiment of the present disclosure. As shown, the emergency oxygen system 100 is separate and distinct from the PSU 106. In at least one embodiment, a partition wall 600 separates the emergency oxygen system 100 from the PSUs 106. The oxygen assemblies 108 are mounted to a first side 602 of the partition wall 600, while the PSUs 106 are mounted to a second side 604 (opposite from the first side 602) of the partition wall 600.

As shown, the emergency oxygen system 100 is outboard in relation to the PSUs 106, which, in turn, can be outboard in relation to the stowage bin assemblies 402. A light fixture 606 can be disposed between a sidewall 608 and an environmental control system (ECS) 610, such as may include vents. The emergency oxygen system 100 can be disposed between the ECS 610 and the PSUs 106.

The emergency oxygen system 100 is separate from the PSUs 106 and the stowage bin assemblies 402. That is, neither the PSUs 106, nor the stowage bin assemblies 402, include the emergency oxygen system 100. The PSUs 106 can also be separate and distinct from the stowage bin assemblies 402.

In at least one embodiment, the emergency oxygen system 100 can extend along lengths of the internal cabin 102 that do not include stowage bin assemblies 402. Further, the positions of the emergency oxygen system 100 and the PSUs 106 can be switched, such that the PSUs 106 are outboard in relation to the emergency oxygen system 100.

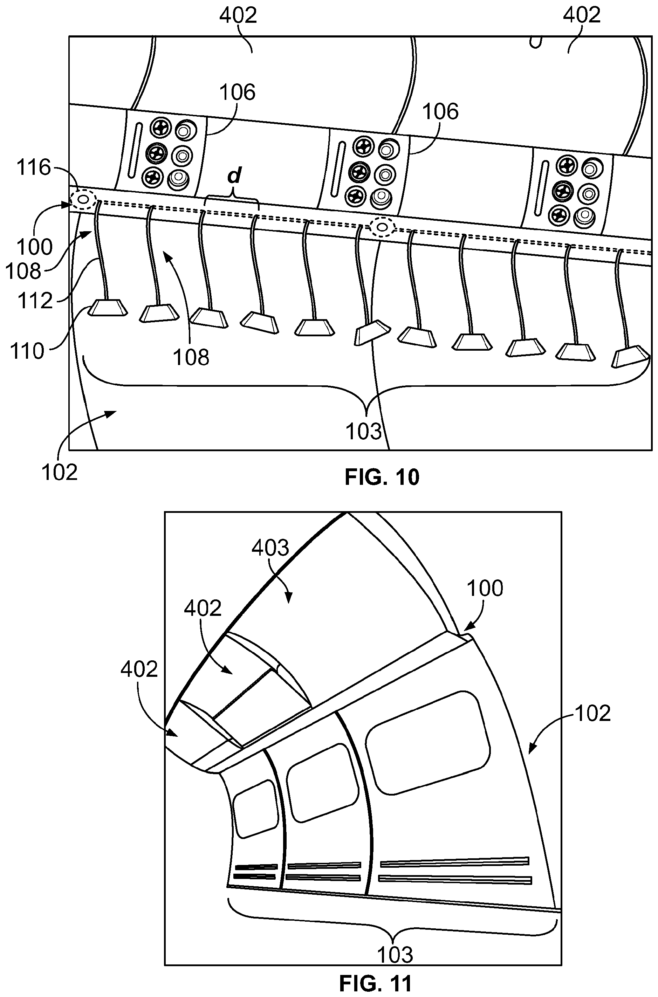

Figure 10 illustrates a lateral view of the emergency oxygen system 100 within an internal cabin 102, according to an embodiment of the present disclosure. As shown, the oxygen assemblies 108 are in deployed positions (for example, dropped below oxygen assembly housings). The oxygen assemblies 108 are retained by the rail 116, which extends along a length 103 of the internal cabin 102.

The oxygen assemblies 108 are linearly arranged and spaced from one another. Neighboring (that is, closest) oxygen assemblies 108 are separated a distance d from one another. In at least one embodiment, the distance d is between 3-10 inches (7,62 - 25,4 cm). For example, the distance d can be 5 inches (12,7 cm). Spacing the oxygen assemblies 108 in such a manner ensures that the oxygen assemblies 108 are readily available for passengers within the internal cabin 102 regardless of seat pitch. That is, the oxygen assemblies 108 are not dependent upon seat pitch. Instead, the oxygen assemblies 108 are uncoupled from seat pitch.

Figure 11 illustrates a perspective lateral view of the emergency oxygen system 100 within an internal cabin 102, according to an embodiment of the present disclosure. The emergency oxygen system 100 extends along the length 103, which may include areas having stowage bin assemblies 402, and areas 403 that are devoid of stowage bin assemblies 402. In at least one example, the internal cabin 102 may not include any stowage bins.

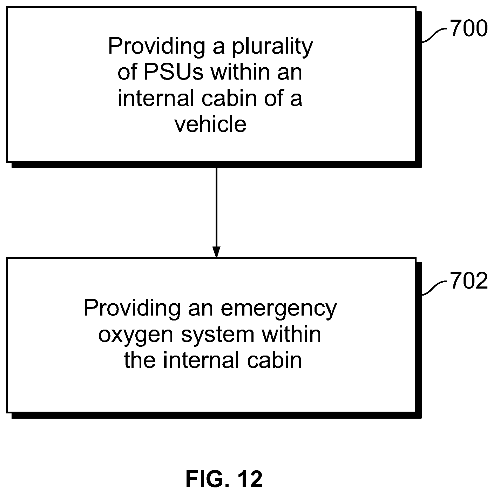

Figure 12 illustrates a flow chart of a method, according to an embodiment of the present disclosure. Referring to Figures 1-12, the method includes providing, at 700, a plurality of passenger service units (PSUs) 106 within an internal cabin 102 of a vehicle 104; and providing, at 702, an emergency oxygen system 100 within the internal cabin 102, wherein the emergency oxygen system 100 is separate and distinct from the plurality of PSUs 106.

In at least one embodiment, the method also includes fluidly coupling an oxygen supply 114 with the plurality of oxygen assemblies 108. For example, said fluidly coupling includes fluidly coupling an oxygen canister 114a to the fluid conduit 112. That is, each oxygen assembly 108 can be coupled to its own respective oxygen canister 114a. As another example, said fluidly coupling includes fluidly coupling an oxygen tank 114b to the plurality of fluid conduits 112 via a manifold 400.

In at least one embodiment, the method also includes retaining the plurality of oxygen assemblies 108 by a rail 116 extending along a length 103 of the internal cabin 102.

In at least one embodiment, the method also includes disposing the emergency oxygen system 100 between a sidewall 504 of the vehicle 104 and the plurality of PSUs 106.

In at least one embodiment, the method also includes separating the emergency oxygen system 100 from the plurality of PSUs 106 by a partition wall 600.

In at least one embodiment, the method also includes disposing one or more of the plurality of PSUs 106 between one or more stowage bin assemblies 402 and the emergency oxygen system 100.

In at least one embodiment, a method includes installing an oxygen system separately from PSU and components of PSU. In at least one embodiment, the method includes installing the oxygen system independently from seat pitch.

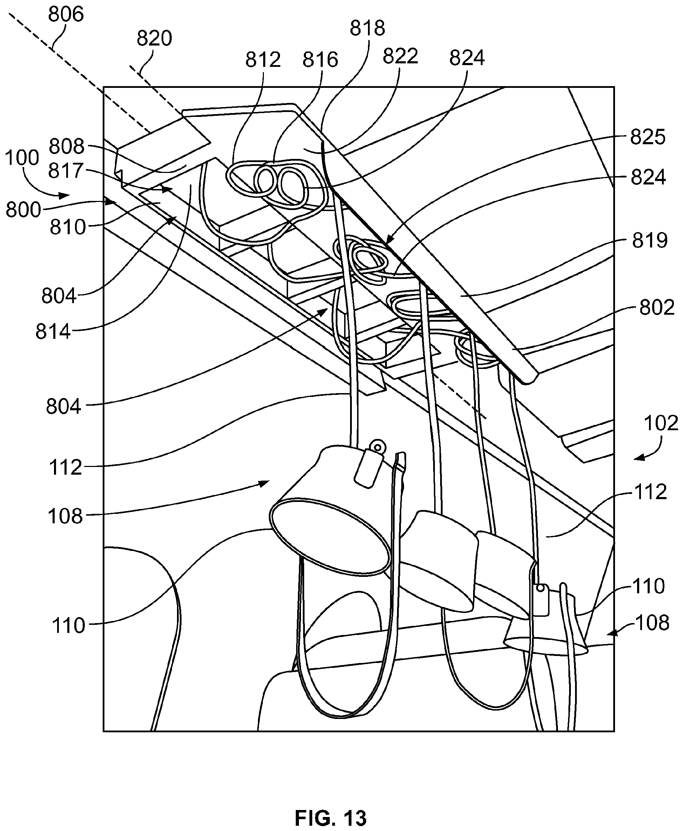

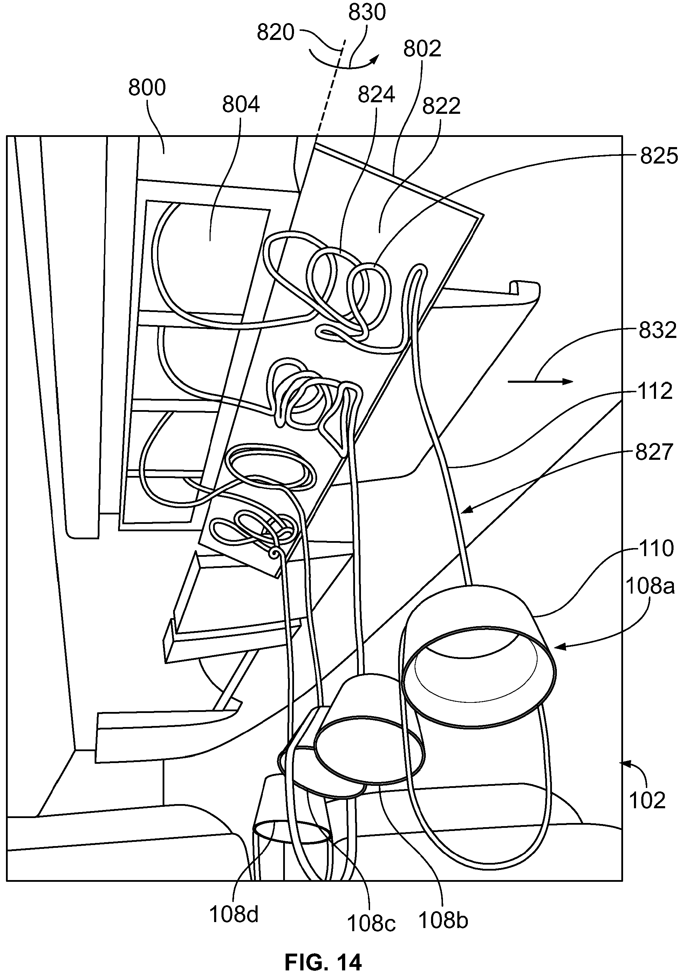

Figure 13 illustrates a perspective lateral bottom view of an emergency oxygen system 100 having oxygen assemblies 108 in deployed positions, according to an embodiment of the present disclosure. Figure 14 illustrates a perspective bottom view of the emergency oxygen system 100 of Figure 13 having the oxygen assemblies 108 in the deployed positions. Referring to Figures 13 and 14, the emergency oxygen system 100 includes a housing 800 and a door 802 moveably secured to the housing 800. The housing 800 can be secured to a rail 116 (shown in Figure 1, for example). Optionally, the housing 800 may form the rail 116.

The housing 800 includes one or more compartments 804 configured to retain the oxygen assemblies 108 in stowed positions. As shown, the housing 800 can include four or more compartments 804 arranged along a line 806. As such, the compartments 804 are linearly arranged. The housing 800 may include more compartments 804 than shown. For example, the housing 800 may include five, six, or more compartments 804. As another example, the housing 800 may include three or less compartments 804. In at least one example, the housing 800 includes a single compartment 804.

Each compartment 804 includes a fore wall 808 connected to an outboard wall 810, an inboard wall 812, and a top wall 814. An aft wall 816 connects to the outboard wall 810, the inboard wall 812, and the top wall 814 opposite from the fore wall 808. An interior chamber 817 is defined between the fore wall 808, the outboard wall 810, the inboard wall 812, and the top wall 814.

The door 802 includes a covering panel 818, which can be connected to an edge lip 819. The edge lip 819 can be canted in relation to the covering panel 818. The door 802 is moveably secured to the housing 800. For example, the door 802 is pivotally coupled to the housing 800 via a pivot axle 820. The door 802 is pivotally coupled to the housing at an inboard surface, such as on and/or within the inboard walls 812 of the compartments 804.

An interior surface 822 of the covering panel 818 includes one or more clips configured to retain portions of the fluid conduits 112. For example, the clips retain tubing 824 of the fluid conduits 112.

The oxygen assemblies 108 are secured in stowed positions, such as shown in Figure 11. In the stowed positions, the door 802 is closed and secured underneath the compartments 804. The door 802 in the closed position has the edge lip 819 secured to or on an outboard surface of the housing 800, such as on or within the outboard walls 810 of the compartments 804. When the door 802 is in the closed position, the oxygen assemblies 108 are in stowed positions. In the stowed positions, the tubing 824 of the fluid conduits 112 can be secured by the clips, which can allow the slack 825 of the tubing 824 to be spooled, coiled, looped, and/or the like. In this manner, the clips neatly, effectively, and efficiently retain the tubing 824. In the stowed positions, the masks 110 and the tubing 824 can rest on top of the interior surface 822 of the covering panel 818.

In response to a deployment event, the door 802 swings open by pivoting inboard toward an aisle of an internal cabin in the direction of arc 830 about the pivot axle 820. As the door 802 swings into an open position, the slack 825 of the fluid conduits 112 follows, as the slack 825 is secured to the interior 822 of the door 802. Consequently, as the door 802 opens, the masks 110 fall out of the compartments 804, but are laterally moved (such as inwardly moved in an inboard direction 832) due to hanging from the free edge (for example, the edge lip 819) of the door, by extending from the slack 825 proximate to the edge lip 819. By deploying the masks 110 in the direction 832 as the masks 110 fall out of the compartments 804, the masks 110 are more readily accessible and easier to grasp by individuals seated within the internal cabin 102.

As an individual pulls one of the masks 110, such as that of the oxygen assembly 108a, the slack 825 within the clips secured to the door 802 is decreased, as the dangling portion 827 of the tubing 824 increases toward the individual. In at least one example, the pulling of the dangling portion 827 of the tubing 824 does not affect the other oxygen assemblies 108b, 108c, and 108d. In particular, the tubing 824 of the oxygen assemblies 108a-108d is not connected. As such, movement of the fluid conduit 112 of one oxygen assembly 108a, b, c, or d, does not affect the other oxygen assemblies 108a, b, c, or d. Alternatively, tubing of different oxygen assemblies may be connected.

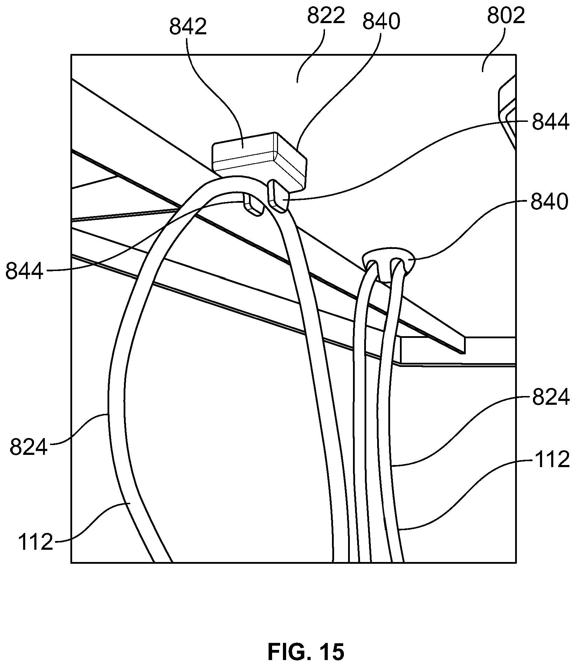

Figure 15 illustrates a perspective bottom view of the door 802 in an open position, according to an embodiment of the present disclosure. Referring to figures 13-15, the interior surface 822 of the door 802 includes clips 840 secured thereto. The clips 840 are secured in relation to each compartment 804. Each clip 840 includes a base 842 secured to the interior surface 822, and flexible retaining prongs 844 that are configured to removably secure around exterior surfaces of the tubing 824 of a fluid conduit 112. In this manner, the clips 840 are configured to retain the tubing 824 to take up slack, and provide a neat, efficient, and effective system for ensuring that excess slack of the fluid conduits 112 is moved away from the compartments 804 when the door 802 is in the open position. In this manner, portions of the fluid conduits 112 are secured to the door 802, which allows the masks 110 to be moved laterally in the direction of arrow 832 during deployment. Further, by securing the slack 825 of the fluid conduits 112 away from the compartments 804, the oxygen assemblies 108 are more easily packed and repacked into the compartments 804 when the door 802 is in the open position, as the excess slack 825 does not form an obstruction within the compartments 804.

The clips 840 allow most of the tubing 824 of the fluid conduit 112 to be held on the door 802. In this manner, the clips 840 allow for a neat and effective organization of the oxygen assemblies 108. Further, the clips 840 reduce a potential of the tubing tangling. Also, the clips 840 allow for easier packing and repacking of the oxygen assemblies 108 within the compartments 804 by providing a clearer path into the compartments 804.

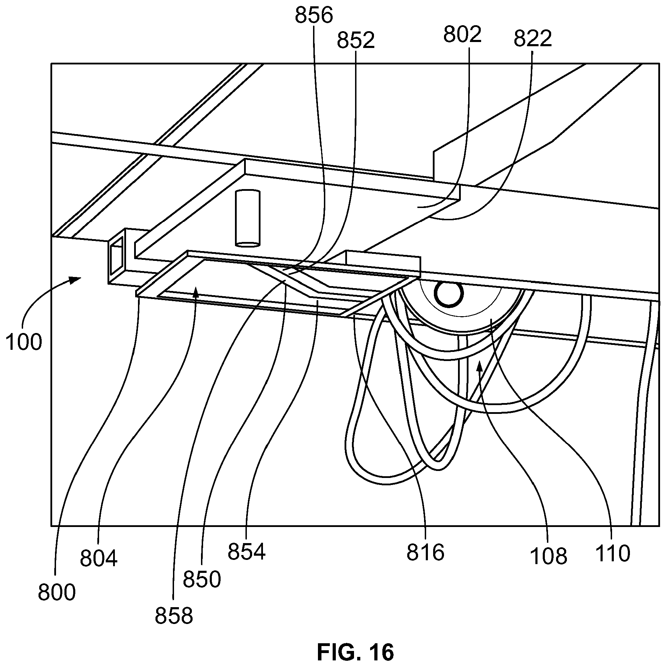

Figure 16 illustrates a perspective lateral bottom view of an open compartment 804, according to an embodiment of the present disclosure. A retainer 850 is secured within each compartment 804. The retainer 850 is configured to be moved between a retaining position and a disengaged position. In at least one example, the retainer 850 is a moveable arm 852, which is pivotally secured to a portion of the compartment 804. For example, the moveable arm 852 includes an end 854 pivotally coupled to the aft wall 816, the top wall 814, or other walls as shown and described with respect to Figure 13. The end 854 connects to a free end 856 by an intermediate body 858.

As shown in Figure 16, the retainer 850 is in a retaining position, in which the intermediate body 858 spans across a portion of the compartment 804. When the oxygen assemblies 108 are packed or repacked into the compartments 804, the retainers 850 are pivoted into the disengaged positions, so that there are clear paths into the compartments 804. As such, an individual may then position the masks 110 into the compartments 804. After a mask 110 is placed into a respective compartment 804, the individual then pivots the retainer 850 into the retaining position underneath the mask 110 so that the mask 110 does not fall out of the compartment 804. Once all the masks 110 are positioned in the compartments 804 and held in position by the retainer 850 in the retaining positions, the door 802 is then closed underneath the masks 110. As the door 802 is closed, one or more portions (such as edges, protuberances, or the like) of the door 802 may then abut into portions of the retainers 850 and move the retainers 850 back to disengaged positions (in which they are not underneath the masks 110). As such, the masks 110 are then supported on the interior surface 822 of the door 802, and are then able to fall out of the compartments 804 when the door 802 swings open during a deployment event.

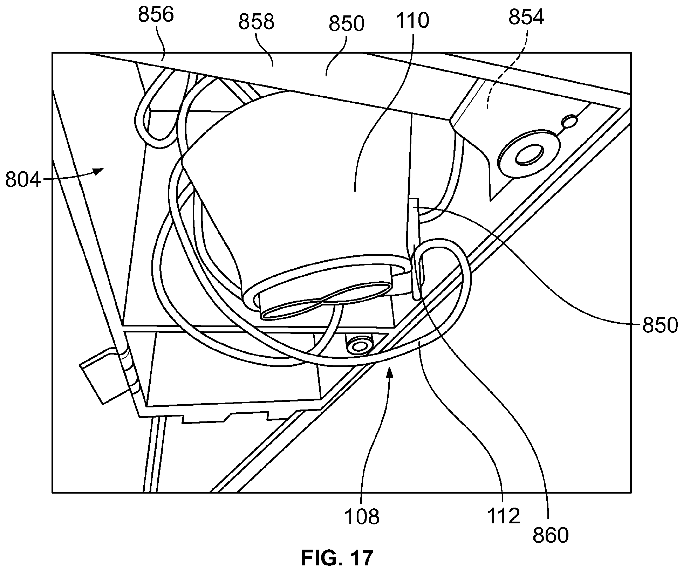

Figure 17 illustrates a perspective fore bottom view of the open compartment 804. As shown, an oxygen assembly 108 is being packed into the compartment 804. The retainer 850 is in the disengaged position in Figure 17, such that the retainer 850 is not underneath the mask 110 temporarily holding the mask 110 within the compartment 804.

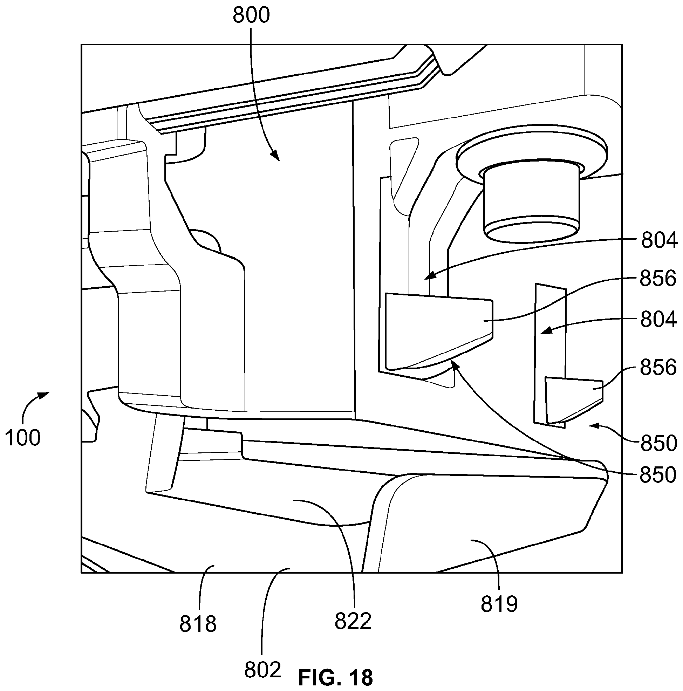

Figure 18 illustrates a perspective end view of an emergency oxygen system 100, according to an embodiment of the present disclosure. As shown in Figure 18, the door 802 is not fully closed. Referring to Figures 13-18, the retainers 850 are in retaining positions such that the intermediate body 856 are underneath the masks 110, thereby temporarily supporting the masks 110 (which allows for easier packing and repacking of the oxygen assemblies 108 when the door 802 is in the open position). As the door 802 is closed, the lip 819 is moved into the free ends 856 and forces the retainers 850 to pivot back to disengaged positions, so that the masks 110 are supported only on the interior surface 822 of the door 802 (thereby allowing the masks 110 to drop out of the compartments 804 as the door 802 opens during a deployment event).

Referring again to Figure 17, instead of (or in addition to) a moveable arm, the retainer 850 may be or otherwise include a snap clip 860. The snap clip 860 is secured to an interior wall portion of the compartment 804, and is configured to snapably retain a portion of the mask 110 (such as a reciprocal protuberance). In this manner, the snap clip 860 can temporarily secure the mask 110 within the compartment 804. Referring to Figures 17 and 18, as the door 802 is closed, the interior surface 822 of the door 802 pushes the mask 110 upwardly, and disengages the portion of the mask 110 from the snap clip 860, thereby ensuring that the mask 110 is supported by the interior surface 822 of the door 802, and no longer by the snap clip 860.

In at least one example, the retainer 850 can include the moveable arm and a snap clip. The retainer 850 can optionally be or include various other structures. For example, the retainer 850 can be or include a magnet. As another example, the retainer 850 can be or include a hook-and-loop fastener. In a retaining position, the retainer 850 is configured to temporarily secure the mask 110 within the compartment 804. In the disengaged position, the retainer 850 does not secure the mask 110 within the compartment 804.

Referring to Figures 1-17, embodiments of the present disclosure provide emergency oxygen systems 100 having oxygen assemblies 108 that are uncoupled from PSUs 106. The oxygen assemblies 108 can be linearly arranged over seats within an internal cabin. Separating the emergency oxygen system 100 from the PSU 106 allows the oxygen assemblies to be linearly arranged within the internal cabin, and also allows components of the PSU 106 to be more easily updated and/or replaced. The linear arrangement of the masks 110 provides any passenger access to an emergency oxygen drop regardless of the seat pitch, location, type of seat, or position of seat (for example, bed position of a lie-flat seat) within an internal cabin. The emergency oxygen systems 100 described herein provide for efficient and effective stowage, deployment, packing, and repacking of oxygen assemblies 100 in relation to compartments 804. The systems and methods described provide intuitive operation for passengers, as well as personnel tasked with packing and repacking the oxygen assemblies 100.

As described herein, the emergency oxygen system 100 is for an internal cabin 102 of a vehicle, such as an aircraft 104. The emergency oxygen system 100 includes a housing 800 including one or more compartments 804, and one or more oxygen assemblies 108. Each of the one or more oxygen assemblies 108 include a mask 110 and a fluid conduit, 112. The mask(s) 110 is configured to be stowed within and deployed from the compartment(s) 804. A door 802 is moveably secured to the housing 800. The door 802 is moveable between a closed position underneath the compartment(s) 804 to secure the mask(s) 110 within the compartment(s) 804, and an open position during a deployment event in which the mask(s) 110 drops down and inboard, for example, (in the direction of arrow 832) out of the compartment(s) 804. As shown in Figures 13 and 14, in particular, the mask(s) 110 hangs down from a portion of the door 802 (for example, a free portion, such as the edge lip 819) when the door 802 is in the open position. In at least one example, the door 802 is configured to rotate between the closed position and the open position, such as about the pivot axle 820.

At least a portion of the fluid conduit 112 is secured to the interior surface 822 of the door 802. The door includes one or more clips 840 secured to the interior surface 822. At least a portion of the fluid conduit 112 (such as slack portions of tubing 824) is secured to the interior surface 822 of the door 802 by the clip(s) 840.

One or more retainers 850 are coupled to the compartment(s) 804. The retainer(s) 850 is moveable between a retaining position in which the retainer(s) 850 temporarily support the mask(s) 110 within the compartment(s) 804 when the door 802 is open, and a disengaged position in which the retainer(s) 850 do not support the mask(s) 110 within the compartment(s) 804. In at least one example, a portion of the door 802 moves the retainer(s) 850 from the retaining position to the disengaged position when the door 802 moves into the closed position. In at least one example, the retainer(s) 850 include one or more arms 852 pivotally coupled to one or more portions of the compartment(s) 804. As another example, the retainer(s) 850 include one or more snap clips 860.

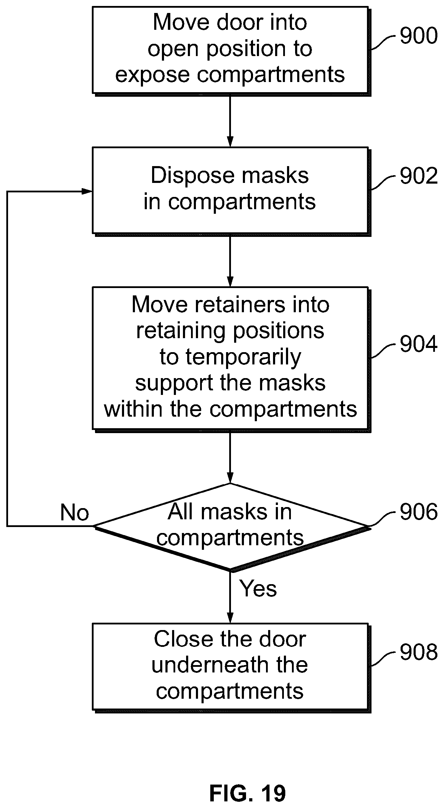

Figure 19 illustrates a flow chart of a method, according to an embodiment of the present disclosure. Referring to Figures 1-9, at 900, a door 802 of an emergency oxygen system 100 can be moved into an open position, thereby exposing one or more compartments 804. At 902, masks 110 of oxygen assemblies 108 are disposed in the open compartments 802 (with at least portions of tubing 824 of the fluid conduits 112 secured to the door 804 by clips 840). At 904, after a mask 110 is positioned within a respective compartment 804, a retainer 850 is moved into a retaining position to temporarily support the mask 110 within the compartment 804. At 906, it is determined if all masks 110 are in respective compartments 804. If not, the method returns to 902. If, however, all the masks 110 are in the respective compartments 804 and temporarily supported by the retainers 850, the door 802 is closed underneath the compartments at 908. As the door 802 moves into the closed position, one or more portions of the door 802 engage one or more portions of the retainers 850 to move the retainers 850 into disengaged positions (in which the masks 110 are no longer supported by the retainers 850), such that the masks 110 are supported on the interior surface 822 of the door 802. In this manner, as the door 802 is opened during a deployment event, the masks 110 are able to drop downwardly (and in the direction 832) out of the compartments 804.

As described herein, embodiments of the present disclosure provide systems and methods for freeing up space within PSUs. Further, embodiments of the present disclosure provide systems and methods that ensure emergency oxygen assemblies are easily and readily available within an internal cabin of an aircraft even if seats within the internal cabin are reconfigured. The emergency oxygen systems and methods described herein reduce time and labor costs associated with manufacture and reconfiguration of internal cabins of aircraft, as there is no need to adjust mounting positions for oxygen assemblies (which were previously within PSUs).

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art.

## Claims

1. An emergency oxygen system (100) for an internal cabin (102, 230) of a vehicle, the emergency oxygen system (100) comprising:
a housing (800) including one or more compartments (804);
one or more oxygen assemblies (108), wherein the one or more oxygen assemblies (108) include a mask (110) and a fluid conduit (112), wherein the mask (110) is configured to be stowed within and deployed from the one or more compartments (804);
a door (802) moveably secured to the housing (800), wherein the door (802) is moveable between a closed position underneath the one or more compartments (804) to secure the mask (110) within the one or more compartments (804), and an open position during a deployment event in which the mask (110) drops down and laterally out of the one or more compartments (804), and wherein the mask (110) is configured to hang down from a portion of the door (802) when the door (802) is in the open position;
one or more retainers (850) coupled to the one or more compartments (804), wherein the one or more retainers (850) are moveable between a retaining position in which the one or more retainers (850) temporarily support the mask (110) within the one or more compartments (804) when the door (802) is the open position, and a disengaged position in which the one or more retainers do not support the mask (110) within the one or more compartments (804);
wherein the mask (110) is supported on an interior surface of the door (802) when the door (802) is in the closed position;
wherein at least a portion of the fluid conduit (112) is secured to the interior surface of the door (802); and
wherein the door (802) includes one or more clips (840) secured to the interior surface, and wherein the at least a portion of the fluid conduit (112) is secured to the interior surface of the door (802) by the one or more clips (840).

2. The emergency oxygen system (100) of claim 1, wherein the door (802) is configured to rotate between the closed position and the open position.

3. The emergency oxygen system (100) of any preceding claim, wherein the door (802) is spring-loaded.

4. The emergency oxygen system (100) of any preceding claim, wherein the masks (110) hang inboard in relation to the compartments (804) when in the open position.

5. The emergency oxygen system (100) of any preceding claim, wherein the one or more clips (840) comprise a base (842) secured to the interior surface (822), and flexible retaining prongs (844) that are configured to removably secure around exterior surfaces of tubing the fluid conduit (112).

6. The emergency oxygen system (100) of any preceding claim, wherein the at least a portion of the fluid conduit (112) comprises most of the fluid conduit (112).

7. The emergency oxygen system (100) of any preceding claim, further comprising a rail (116) that extends along a length of the internal cabin (102) and retains the oxygen assemblies (108).

8. The emergency oxygen system (100) of claim 7, wherein the rail (116) comprises an array of rails

9. The emergency oxygen system (100) of any preceding claim, wherein a portion of the door (802) moves the one or more retainers from the retaining position to the disengaged position when the door (802) moves into the closed position.

10. The emergency oxygen system (100) of any preceding claim, wherein the one or more retainers comprise one or more arms pivotally coupled to one or more portions of the one or more compartments (804).

11. The emergency oxygen system (100) of any preceding claim, wherein the one or more retainers comprise one or more snap clips.

12. The emergency oxygen system (100) of any preceding claim, wherein the one or more compartments (804) comprise a plurality of compartments (804), and wherein the one or more oxygen assemblies (108) comprise a plurality of oxygen assemblies (108).

13. A method comprising:
stowing a mask (110) of one or more oxygen assemblies (108) within one or more compartments (804) of a housing of an emergency oxygen system (100);
moving a door (802) secured to the housing between a closed position underneath the one or more compartments (804) to secure the mask (110) within the one or more compartments (804), and an open position during a deployment event in which the mask (110) drops down and laterally out of the one or more compartments (804), and wherein the mask (110) is configured to hang down from a portion of the door (802) when the door (802) is in the open position;
supporting the mask (110) on an interior surface of the door (802) when the door (802) is in the closed position;
securing, by at least one or more clips, at least a portion of a fluid conduit (112) of the one or more oxygen assemblies (108) to an interior surface of the door (802); and
moving one or more retainers coupled to the one or more compartments (804) between a retaining position in which the one or more retainers temporarily support the mask (110) within the one or more compartments (804) when the door (802) is in the open position, and a disengaged position in which the one or more retainers do not support the mask (110) within the one or more compartments (804).

14. The method of claim 13, wherein said moving comprises rotating the door (802) between the closed position and the open position.

15. The method of claim 13 or 14, wherein said moving comprises moving, by a portion of the door (802), the one or more retainers from the retaining position to the disengaged position when the door (802) moves into the closed position.

## Patentansprüche

1. Notfallsauerstoffsystem (100) für eine Innenkabine (102, 230) eines Fahrzeugs, wobei das Notfallsauerstoffsystem (100) Folgendes umfasst:
ein Gehäuse (800), das ein oder mehrere Fächer (804) aufweist,
eine oder mehrere Sauerstoffanordnungen (108), wobei die eine oder die mehreren Sauerstoffanordnungen (108) eine Maske (110) und eine Fluidleitung (112) aufweisen, wobei die Maske (110) dazu ausgelegt ist, in dem einen oder den mehreren Fächern (804) verstaut und aus diesen ausgelöst zu werden,
eine Tür (802), die beweglich an dem Gehäuse (800) befestigt ist, wobei die Tür (802) zwischen einer geschlossenen Position unterhalb des einen oder der mehreren Fächer (804) zur Befestigung der Maske (110) in dem einen oder den mehreren Fächern (804), und einer offenen Position während eines Auslöseereignisses, bei dem die Maske (110) nach unten und seitlich aus dem einen oder den mehreren Fächern (804) herausfällt, beweglich ist, und wobei die Maske (110) dazu ausgelegt ist, von einem Abschnitt der Tür (802) herunterzuhängen, wenn sich die Tür (802) in der offenen Position befindet,
eine oder mehrere Halterungen (850), die an das eine oder die mehreren Fächer (804) gekoppelt sind, wobei die eine oder die mehreren Halterungen (850) zwischen einer Halteposition, in der die eine oder die mehreren Halterungen (850) die Maske (110) vorübergehend in dem einen oder den mehreren Fächern (804) stützen, wenn die Tür (802) in der offenen Position ist, und einer ausgerückten Position, in der die eine oder die mehreren Halterungen die Maske (110) nicht in dem einen oder den mehreren Fächern (804) stützen, beweglich sind,
wobei die Maske (110) auf einer Innenfläche der Tür (802) gestützt ist, wenn sich die Tür (802) in der geschlossenen Position befindet,
wobei mindestens ein Abschnitt der Fluidleitung (112) an der Innenfläche der Tür (802) befestigt ist und
wobei die Tür (802) eine oder mehrere Klemmen (840) aufweist, die an der Innenfläche befestigt sind, und wobei der mindestens eine Abschnitt der Fluidleitung (112) durch die eine oder die mehreren Klemmen (840) an der Innenfläche der Tür (802) befestigt ist.

2. Notsauerstoffsystem (100) nach Anspruch 1, wobei die Tür (802) zum Drehen zwischen der geschlossenen Position und der offenen Position ausgelegt ist.

3. Notsauerstoffsystem (100) nach einem der vorhergehenden Ansprüche, wobei die Tür (802) federbelastet ist.

4. Notsauerstoffsystem (100) nach einem der vorhergehenden Ansprüche, wobei die Masken (110) in Bezug auf die Fächer (804) in der offenen Position innenseitig hängen.

5. Notsauerstoffsystem (100) nach einem der vorhergehenden Ansprüche, wobei die eine oder die mehreren Klemmen (840) eine an der Innenfläche (822) befestigte Basis (842) und flexible Haltezinken (844) umfassen, die dazu ausgelegt sind, entfernbar um Außenflächen des Schlauchs der Fluidleitung (112) befestigt zu werden.

6. Notfallsauerstoffsystem (100) nach einem der vorhergehenden Ansprüche, wobei der mindestens eine Abschnitt der Fluidleitung (112) den größten Teil der Fluidleitung (112) umfasst.

7. Notsauerstoffsystem (100) nach einem der vorhergehenden Ansprüche, ferner umfassend eine Schiene (116), die sich entlang einer Länge der Innenkabine (102) erstreckt und die Sauerstoffanordnungen (108) hält.

8. Notsauerstoffsystem (100) nach Anspruch 7, wobei die Schiene (116) eine Anordnung von Schienen umfasst.

9. Notsauerstoffsystem (100) nach einem der vorhergehenden Ansprüche, wobei ein Abschnitt der Tür (802) die eine oder die mehreren Halterungen von der Halteposition in die ausgerückte Position bewegt, wenn sich die Tür (802) in die geschlossene Position bewegt.

10. Notsauerstoffsystem (100) nach einem der vorhergehenden Ansprüche, wobei die eine oder die mehreren Halterungen einen oder mehrere Arme umfassen, die schwenkbar an den einen oder die mehreren Abschnitte des einen oder der mehreren Fächer (804) gekoppelt sind.

11. Notfallsauerstoffsystem (100) nach einem der vorhergehenden Ansprüche, wobei die eine oder die mehreren Halterungen eine oder mehrere Schnappklemmen umfassen.

12. Notfallsauerstoffsystem (100) nach einem der vorhergehenden Ansprüche, wobei das eine oder die mehreren Fächer (804) eine Vielzahl von Fächern (804) umfassen und wobei die eine oder die mehreren Sauerstoffanordnungen (108) eine Vielzahl von Sauerstoffanordnungen (108) umfassen.

13. Verfahren, umfassend:
Verstauen einer Maske (110) einer oder mehrerer Sauerstoffanordnungen (108) in einem oder mehreren Fächern (804) eines Gehäuses eines Notfallsauerstoffsystems (100),
Bewegen einer an dem Gehäuse befestigten Tür (802) zwischen einer geschlossenen Position unterhalb des einen oder der mehreren Fächer (804) zur Befestigung der Maske (110) in dem einen oder den mehreren Fächern (804) und einer offenen Position während eines Auslöseereignisses, bei dem die Maske (110) nach unten und seitlich aus dem einen oder den mehreren Fächern (804) herausfällt, und wobei die Maske (110) dazu ausgelegt ist, von einem Abschnitt der Tür (802) herunterzuhängen, wenn sich die Tür (802) in der offenen Position befindet,
Stützen der Maske (110) auf einer Innenfläche der Tür (802), wenn sich die Tür (802) in der geschlossenen Position befindet,
Befestigen mindestens eines Abschnitts einer Fluidleitung (112) der einen oder der mehreren Sauerstoffanordnungen (108) durch mindestens eine oder mehrere Klemmen an einer Innenfläche der Tür (802) und
Bewegen einer oder mehrerer Halterungen, die an das eine oder die mehreren Fächer (804) gekoppelt sind, zwischen einer Halteposition, in der die eine oder die mehreren Halterungen die Maske (110) vorübergehend in dem einen oder den mehreren Fächern (804) stützen, wenn die Tür (802) in der offene Position ist, und einer ausgerückten Position, in der die eine oder die mehreren Halterungen die Maske (110) nicht in dem einen oder den mehreren Fächern (804) stützen.

14. Verfahren nach Anspruch 13, wobei das Bewegen das Drehen der Tür (802) zwischen der geschlossenen Position und der offenen Position umfasst.

15. Verfahren nach Anspruch 13 oder 14, wobei das Bewegen das Bewegen der einen oder der mehreren Halterungen durch einen Abschnitt der Tür (802) aus der Halteposition in die ausgerückte Position umfasst, wenn sich die Tür (802) in die geschlossene Position bewegt.

## Revendications

1. Système d'oxygène d'urgence (100) pour une cabine interne (102, 230) d'un véhicule, le système d'oxygène d'urgence (100) comprenant :
un logement (800) incluant un ou plusieurs compartiments (804) ;
un ou plusieurs ensembles oxygène (108), les un ou plusieurs ensembles oxygène (108) incluant un masque (110) et un conduit de fluide (112), le masque (110) étant configuré pour être rangé à l'intérieur et déployé à partir des un ou plusieurs compartiments (804) ;
une porte (802) fixée de façon mobile au logement (800), la porte (802) étant mobile entre une position fermée sous les un ou plusieurs compartiments (804) pour fixer le masque (110) à l'intérieur des un ou plusieurs compartiments (804), et une position ouverte pendant un événement de déploiement au cours duquel le masque (110) tombe vers le bas et latéralement hors des un ou plusieurs compartiments (804), et le masque (110) étant configuré pour pendre vers le bas à partir d'une partie de la porte (802) lorsque la porte (802) est dans la position ouverte ;
un ou plusieurs dispositifs de retenue (850) couplés aux un ou plusieurs compartiments (804), les un ou plusieurs dispositifs de retenue (850) étant mobiles entre une position de retenue dans laquelle les un ou plusieurs dispositifs de retenue (850) supportent temporairement le masque (110) à l'intérieur des un ou plusieurs compartiments (804) lorsque la porte (802) est dans la position ouverte, et une position dégagée dans laquelle les un ou plusieurs dispositifs de retenue ne supportent pas le masque (110) à l'intérieur des un ou plusieurs compartiments (804) ;
dans lequel le masque (110) est supporté sur une surface intérieure de la porte (802) lorsque la porte (802) est dans la position fermée ;
dans lequel au moins une partie du conduit de fluide (112) est fixée à la surface intérieure de la porte (802) ; et
dans lequel la porte (802) inclut une ou plusieurs pinces (840) fixées à la surface intérieure, et dans lequel au moins une partie du conduit de fluide (112) est fixée à la surface intérieure de la porte (802) par les une ou plusieurs pinces (840).

2. Système d'oxygène d'urgence (100) selon la revendication 1, dans lequel la porte (802) est configurée pour entrer en rotation entre la position fermée et la position ouverte.

3. Système d'oxygène d'urgence (100) selon l'une quelconque des revendications précédentes, dans lequel la porte (802) est à ressort.

4. Système d'oxygène d'urgence (100) selon l'une quelconque des revendications précédentes, dans lequel les masques (110) pendent vers l'intérieur par rapport aux compartiments (804) lorsqu'ils sont dans la position ouverte.

5. Système d'oxygène d'urgence (100) selon l'une quelconque des revendications précédentes, dans lequel les une ou plusieurs pinces (840) comprennent une base (842) fixée à la surface intérieure (822), et des griffes de retenue flexibles (844) qui sont configurées pour fixer de façon amovible autour des surfaces extérieures de la tubulure le conduit de fluide (112).

6. Système d'oxygène d'urgence (100) selon l'une quelconque des revendications précédentes, dans lequel l'au moins une partie du conduit de fluide (112) comprend la plupart du conduit de fluide (112).

7. Système d'oxygène d'urgence (100) selon l'une quelconque des revendications précédentes, comprenant en outre un rail (116) qui s'étend le long d'une longueur de la cabine interne (102) et retient les ensembles oxygène (108).

8. Système d'oxygène d'urgence (100) selon la revendication 7, dans lequel le rail (116) comprend un réseau de rails.

9. Système d'oxygène d'urgence (100) selon l'une quelconque des revendications précédentes, dans lequel une partie de la porte (802) déplace les un ou plusieurs dispositifs de retenue de la position de retenue à la position dégagée lorsque la porte (802) se déplace jusque dans la position fermée.

10. Système d'oxygène d'urgence (100) selon l'une quelconque des revendications précédentes, dans lequel les un ou plusieurs dispositifs de retenue comprennent un ou plusieurs bras couplés de façon pivotante à une ou plusieurs parties des un ou plusieurs compartiments (804).

11. Système d'oxygène d'urgence (100) selon l'une quelconque des revendications précédentes, dans lequel les un ou plusieurs dispositifs de retenue comprennent un ou plusieurs pinces à pression.

12. Système d'oxygène d'urgence (100) selon l'une quelconque des revendications précédentes, dans lequel les un ou plusieurs compartiments (804) comprennent une pluralité de compartiments (804), et dans lequel les un ou plusieurs ensembles oxygène (108) comprennent une pluralité d'ensembles oxygène (108).

13. Procédé comprenant :
le rangement d'un masque (110) des un ou plusieurs ensembles oxygène (108) à l'intérieur d'un ou de plusieurs compartiments (804) d'un logement d'un système d'oxygène d'urgence (100) ;
le déplacement d'une porte (802) fixée au logement entre une position fermée sous les un ou plusieurs compartiments (804) pour fixer le masque (110) à l'intérieur des un ou plusieurs compartiments (804), et une position ouverte pendant un événement de déploiement au cours duquel le masque (110) tombe vers le bas et sort latéralement des un ou plusieurs compartiments (804), et le masque (110) étant configuré pour pendre vers le bas à partir d'une partie de la porte (802) lorsque la porte (802) est dans la position ouverte ;
le support du masque (110) sur une surface intérieure de la porte (802) lorsque la porte (802) est dans la position fermée ;
la fixation, par au moins une ou plusieurs pinces, d'au moins une partie d'un conduit de fluide (112) des un ou plusieurs ensembles oxygène (108) à une surface intérieure de la porte (802) ; et
le déplacement d'un ou de plusieurs dispositifs de retenue couplés aux un ou plusieurs compartiments (804) entre une position de retenue dans laquelle les un ou plusieurs dispositifs de retenue supportent temporairement le masque (110) à l'intérieur des un ou plusieurs compartiments (804) lorsque la porte (802) est dans la position ouverte, et une position dégagée dans laquelle les un ou plusieurs dispositifs de retenue ne supportent pas le masque (110) à l'intérieur des un ou plusieurs compartiments (804).

14. Procédé selon la revendication 13, dans lequel ledit déplacement comprend la mise en rotation de la porte (802) entre la position fermée et la position ouverte.

15. Procédé selon la revendication 13 ou la revendication 14, dans lequel ledit déplacement comprend le déplacement, par une partie de la porte (802), des un ou plusieurs dispositifs de retenue de la position de retenue à la position dégagée lorsque la porte (802) se déplace jusque dans la position fermée.
